Europäisches Patentamt

European Patent Office

Office européen des brevets

(11) Publication number: **0 254 402 B1**

## EUROPEAN PATENT SPECIFICATION

(45) Date of publication of patent specification: **29.01.92** (51) Int. Cl.⁵: **B01D 53/34**, B01D 53/06

(21) Application number: **87304661.9**

(22) Date of filing: **27.05.87**

(54) **Improved gas/solid contact method for removing sulfur oxides from gases.**

(30) Priority: **27.05.86 US 866670**

(43) Date of publication of application:
**27.01.88 Bulletin  88/04**

(45) Publication of the grant of the patent:
**29.01.92 Bulletin  92/05**

(84) Designated Contracting States:
**AT BE CH DE ES FR GB GR IT LI LU NL SE**

(56) References cited:
**US-A- 4 001 375
US-A- 4 071 436
US-A- 4 263 128
US-A- 4 332 672**

(73) Proprietor: **ENGELHARD CORPORATION
Menlo Park, CN 40
Edison New Jersey 08818(US)**

(72) Inventor: **Moore, Andrew S.
1161 North Boyd Parkway
Middlesex New Jersey(US)**
Inventor: **Bartholic, David B.
75 Westumpka Lane
Watchung New Jersey(US)**
Inventor: **Barger, Dwight F.
91 North Main Street
High Bridge New Jersey(US)**
Inventor: **Reagan, William J.
10 Manor Drive
Englishtown New Jersey(US)**

(74) Representative: **Geering, Keith Edwin et al
REDDIE & GROSE 16 Theobalds Road
London WC1X 8PL(GB)**

Rank Xerox (UK) Business Services

**Description**

This invention relates to a continuous cyclic process for efficiently removing sulfur oxides (SOx) from waste gases with a regenerable adsorbent and a means of regenerating the adsorbent. The process features contact of the waste gas with a fluidizable regenerable sorbent in a progressive flow type adsorber having an elongate chamber (riser) and release of the adsorbed oxides in the form of hydrogen sulfide by contact with reducing gas mixed with water vapor.

A necessary and integral part of a fluid catalytic cracking reactor involves the regenerator wherein the spent catalyst has its activity restored. Regeneration of spent catalyst is generally effected after separation of the spent catalyst from the reaction products. The spent catalyst is removed from the reaction zone and contacted in a stripping zone with a stripping medium, usually steam, to remove vaporized and entrained and/or occluded hydrocarbons from the catalyst. From the stripping zone, a stripped catalyst is passed into a regeneration zone wherein the stripped spent catalyst is regenerated by burning coke deposits therefrom with an oxygen-containing gas, usually air. The resulting hot regenerated catalyst from the regeneration zone is then recycled to the reaction zone in contact with additional hydrocarbon feed. When the hydrocarbon feed to the fluid catalytic cracking reactor riser contains sulfur, oxides of sulfur report in the flue gas from the regenerator, creating a noxious gas stream unless the feed is low in sulfur. A similar problem of sulfur oxide emissions resulting from regeneration of spent solid contact material by burning occurs in the operation of fluid cokers or selective vaporization processes of the type described in U. S. 4,263,128 (Bartholic), to which attention is directed for detail. Sulfur oxide emissions in flue gases also occur in operation of coal fired boilers or any process in which sulfur-containing fuel is combusted.

Flue gas sulfur removal units have been expensive to build and are often plagued with operating and/or by-product disposal problems. Flue gas sulfur removal units fall into three general categories: wet systems, once through dry systems, and regenerable systems.

Wet flue gas sulfur removal systems consume large quantities of water, require stack gas reheat, create slurries that are dewatered in crystallizers or settling ponds, and are built employing expensive metallurgy to combat corrosion. Once-through dry systems generate large quantities of solids that must be disposed; the solids handling facilities are a frequent source of problems. Regenerable dry systems are often expensive to build because they employ swing adsorbers. While one adsorber train is capturing sulfur, the other is undergoing regeneration. The valving required to effect the adsorber changes must be able to withstand the temperature and solids content of the flue gas. Solids present in the flue gas stream coat the adsorbent if it is stationary and dilute the adsorbent if it is fluidized. The net result is reduced SOx removal efficiency. Some of the regenerable systems require high purity desorption gas.

In attempts to reduce sulfure oxide (SOx) emissions from FCC units, SOx transfer additives have been injected into the circulating catalyst inventory. Similar technology has been suggested for operating selective vaporization units - see U. S. 4,325,815 (Bartholic).

The SOx transfer additives are fluidizable particles of material capable of reacting with an oxide of sulfur in an oxidizing atmosphere,or an environment which is not substantially reducing, to form solid compounds capable of reduction in the reducing atmosphere of the FCC reactor to yield $H_2S$. Upon such reduction, the sulfur leaves the reactor as gaseous $H_2S$ and organic compounds of sulfur resulting from the cracking reaction. Since these sulfur compounds are detrimental to the quality of motor gasoline and fuel gas by-products, the catalytic cracker is followed by downstream treating facilities for their removal. Thus the gaseous fractions of cracked product may be scrubbed with an amine solution to absorb $H_2S$ which is then passed to facilities for conversion to elemental sulfur, e.g. a Claus plant. The additional $H_2S$ added to the cracker product stream by chemical reduction in the reactor of the solid sulfur compounds formed in the regenerator imposes little additional burden on the sulfur recovery facilities. It has been proposed to utilize this transfer concept to remove oxides of sulfur from waste gases other than FCC flue gas by introducing such gases into the regenerator of an FCC unit operated with an inventory of SOx adsorbent and removing the sulfur from the circulating inventory in the FCC riser where a reducing atmosphere exists.

Discussion of a variety of oxides which exhibit the property of combining with SOx and thermodynamic analysis of their behavior in this regard are set out by Lowell et al., SELECTION OF METAL OXIDES FOR REMOVING SOx FROM FLUE GAS, IND. ENG. CHEM. PROCESS DES. DEVELOP., Vol. 10, No.3 at pages 384-390 (1971).

An early attempt to reduce SOx emission from catalytic cracking units, as described in U. S. 3,699,037, involves adding particles of a Group II metal compound, especially calcium or magnesium oxide, to a cracking unit cycle at a rate at least as great as the stoichiometric rate of sulfur deposition on the cracking catalyst, the additive preferably being injected into the regeneration zone in the form of particles greater than 20 microns. Particle size was chosen to assure a relatively long residence time in the unit. In putting the invention into practice, the Group II metal compound is recycled at least in part between the reactor and the regenerator, the remainder leaving the cycle along with catalyst fines entrained in regenerator flue gas. Subsequently it was proposed to incorporate the alkaline earth metal compound in the cracking catalyst particles by impregnation in order to minimize loss of the sulfur acceptor in the regenerator flue gases - see U. S. 3,835,031. This patent apparently recognizes the need for free oxygen for binding SOx with a Group II metal oxide since the equations for the reaction taking place in the regenerator are summarized as follows:

$$MgO + SO_2 + 1/2\ O_2 = MgSO_4$$

Similar use of reactive alumina either as a discrete fluidizable entity or as a component of catalyst particles is described in U. S. 4,071,436, 4,115,250 and 4,115,251. Use of oxidants including platinum or chromium as adjuncts to alumina is suggested in these patents. Similar technology has been suggested for operating selective vaporization units - see U. S. 4,325,815 (Bartholic).

In the prior art techniques aforementioned, emphasis was on reversibly reacting sulfur oxides in the flue gas, and doing so while the gases were still in the regenerator. Since the sulfur loaded particles were carried to the reactor to be converted to gaseous hydrogen sulfide under the reducing atmosphere created by the cracking operation, the agents used to bind and then release sulfur were necessarily limited to those capable of doing so under the constraints of temperature and time imposed by the operation of the reactor and the regenerator.

With units operating with high sulfur feedstock, relatively large amounts of sulfur acceptors having high unit capacity to adsorb SOx are needed to accomplish reductions in sulfur oxide levels. This will result in appreciable dilution of the active catalyst in the cracking reaction cycle whether the sulfur acceptor is a part of the catalyst particles or is present as discrete entities circulated with catalyst inventory. A basic limitation is that conditions of time and temperature for operating cyclic cracking units, especially heat balanced FCC units, are geared to maximizing production of desired products,and conditions that will favor this result are by no means those that are optimum for reversibly reacting sulfur oxides in the regenerator and carrying the sulfur back to the reactor for conversion at least in part to hydrogen sulfide. Such procedures offer promise as means to reduce SOx emissions from refineries but they leave much to be desired. The technique has had limited commercial success, because SOx removal activity decreases rapidly with time with presently available SOx transfer agents.

In U. S. 4,448,674 (Bartholic) there is described a system for application of the technique of binding SOx in FCC regenerator gases operated with limited air and producing a flue gas containing substantial amounts of carbon monoxide, i.e. a reducing atmosphere. In such cases, the flue gas temperature is reduced to a level at which ignition of CO is inhibited, air is injected to provide an oxidizing atmosphere and the cooled stream containing carbon monoxide and oxygen is contacted with the regenerated catalyst in a transport line under turbulent conditions to promote pick-up of SOx. As described in the patent, the effluent from that contact is passed through a valve and then sent to a CO boiler to recover the fuel value of CO by combustion at higher temperature. The agent to bind SOx is separated from gases in a precipitator and is not regenerated. To the contrary, regenerable agents are avoided because they will release oxides of sulfur in the CO boiler.

U. S. 4,001,375 (Longo) describes a process for the removal of sulfur oxides from gases by a regenerable sorbent composed of a cerium oxide sorbent such as cerium oxide supported on alumina. Contact of gas with sorbent is in a fixed bed. When the sorbent is loaded to a desired level it is transferred to another fixed bed in which hydrocarbon gas or hydrogen in admixture with "steam or another inert gas" is used to regenerate the sorbent. The patent teaches that during regeneration the desorbed species is initially sulfur dioxide;when about 50% of the sulfur is removed, the desorbed species becomes $H_2S$. Referring to an example in the patent, it is stated that "the regeneration step is almost instantaneous relative to the slower rate of $SO_2$ pickup."

U. S. 4,325,811 (Sorrentino) describes a process using a regenerable sulfur oxide adsorbent to control SOx emission of the regenerator of an FCC unit in which a stream of particles including particles of the adsorbent is withdrawn from the regeneration zone and passed to a reducing zone to release adsorbed SOx. The stream of particles is then circulated back to the regeneration zone and recirculated between the reaction and the regeneration zone. In the reducing zone temperatures range from about 590°C. (1094°F.) to about 820°C (1508°F.). The preferred reducing gas comprises a mixture of steam with hydrogen or hydrocarbon.

Illustrative of other patents relating to regenerable SOx adsorbents adapted for use in FCC units are: U. S. 4,153,534 (Vasalos); U.S. 4,153,535 (Vasalos et al); U. S. 4,071,436 (Blanton); U. S. 4,115,249 (Blanton et al); U. S. 4,166,787 (Blanton et al); U. S. 4,146,463 (Radford et al); U. S. 3,835,031 (Bertolacini et al);

Canadian Patent 1,154,735 (Brown et al); U. S. 4,423,091 (Bertolacini et al); U. S. 4,495,304 and U.S. 4,495,305 (Yoo et al); U. S. 4,529,574 (Wang); U. S. 4,459,371 and U. S. 4,459,372 (Hobbs et al); and U. S. 4,381,991 (Bertolacini et al).

A recent publication of Andersson et al, "SOx Adsorption/Desorption Processes on γ-Alumina for SOx Transfer Catalyst," Applied Catalysis, 16 (1985) 49-58, describes thermogravimetric investigations into SOx adsorption/desorption for different conditions purported to simulate FCC operations using γ-alumina as the adsorbent. It is noted, however, that conclusions in the paper regarding desorption of SOx in an FCC riser are based on thermogravimetric desorption tests using alumina that was not coked.

A fluidized bed system for reducing NOx and SOx is described in a publication of Haslbeck et al, "The NOXSO Process Development; an Update," prepared for the Ninth EPA-EPRI Symposium on Flue Gas Desulfurization, June 4-7, 1985. A regenerable adsorbent is used.

The present invention provides a novel continuous cyclic process for removing high levels of the sulfur oxide (SOx) content of waste gases and continuously regenerating the adsorbent and recycling the regenerated adsorbent to the adsorber. The invention results from the discovery that SOx in hot waste gases wherein substantially all of the carbon is present as carbon dioxide can be removed by a dry regenerable adsorbent in the presence of free oxygen at transport velocities in a progressive flow type adsorber having an elongate chamber (riser) with upflow or downflow or a combination of upflow and downflow - the latter type of riser being termed a folded riser. Flow of adsorbent and gas is concurrent and the adsorbent is in dilute phase during its passage through the riser at an exit superficial gas velocity above the transport velocity;

e.g. above 1.1 m/sec (3.5 feet/sec) for upflow systems, preferably 9-27.5 m/sec (30-90 ft/sec), and most preferably about 12-24.5 m/sec (40-80) ft/Sec, resulting in short gas/sold contact times of 30 seconds or less, preferably 5 seconds or less, and most preferably 1 second or less. The adsorbent bearing a deposit of sulfur oxides and clean hot stack gas are then immediately separated, preferably in a high efficiency solids separation device, in a manner such that the gas and adsorbent particles are never in contact with each other under conditions such that a bed of adsorbent particles is present. The outlet of the riser from which hot sulfur containing adsorbent passes is in flow communication with a desorption zone. In the desorption zone, the sulfur on the adsorbent is removed as $H_2S$ by contact reducing gas, e.g.with hydrogen and/or light hydrocarbon gas, and water vapor at elevated temperatures. The desorption vessel temperature for any specific adsorbent can be determined by means of conventional TGA (thermal gravimetric analysis) of a sulfur-laden adsorbent using hydrogen to desorb sulfur. The desorption off gas and any entrained adsorbent are then separated. The desorption gas containing $H_2S$ can then be sent, after cooling, to a conventional amine treater to remove $H_2S$.

The prior art regenerable SOx adsorbent technology utilized fixed beds to remove SOx from waste gases and to regenerate the adsorbent. Efficient use of that technology called for the selection of adsorbents having maximum capacity to bind oxides of sulfur and loading the absorbent with SOx to its capacity. A similar constraint was imposed on SOx transfer agents used to reduce SOx emissions from FCC regeneration. In practice of the present invention, it is not necessary to load the adsorbent with SOx to its capacity. To the contrary, effective control of SOx emissions is achieved simply by desorbing at least as much SOx as is adsorbed and this can be accomplished with adsorbents having limited capacity to bind SOx. Furthermore, since the SOx transfer agent is not cocirculated with FCC catalysts, adsorbents can be used which could not be cocirculated with FCC catalysts because they would impair catalyst activity and/or selectivity.

A principal advantage of the present invention results from the fact that SOx is removed from waste gas in a fast fluid riser. Such a vessel is very small, compared to vessels used in prior technologies. Thus capital costs are reduced. For example, high levels of SOx removal, i.e., 95% or greater, can be achieved in a 15.25m (50 foot) riser using a gas flow rate of 15.25 m/sec. In contrast, a fast fluid riser SOx adsorber downstream of an FCC regenerator operating at FCC regenerator pressure can treat the same amount of flue gas in an absorber vessel 3.8m in diameter by 15.25m long (12.5 ft x 50 ft) as can be treated in a fluid limestone boild er which is 14.3m in diameter by 15.25m high (47 ft x 50 ft) or a SOx adsorber downstream of a power house can treat as much flue gas in a vessel 1/4 of the diameter of a vessel operating at a superficial velocity of 0.9 M/sec (3 ft./sec).

Other advantages of the invention include adsorbent regeneration flexibility with regard to time and temperature, flexibility in the choice of desorption gas composition, desorption of sulfur as $H_2S$, continuous adsorption of SOx and desorption of sulfur, and no production of by-products.

The process is applicable to a wide range of stationary processes in which gaseous SOx is emitted by the combustion of sulfur containing fuel including gases in which particulates are present. Examples are FCC units, smelters, heavy oil crackers, selective vaporization processes, coal or oil fired boilers and

4

furnaces, and off-gas (tail gas) from a sulfur recovery plant.

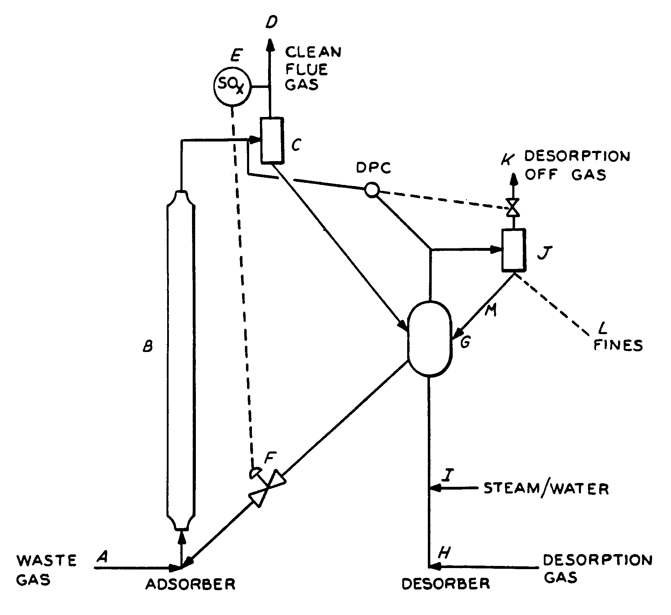

The accompanying figure is a flow scheme for a preferred form of a system of the present invention which is suitable for carrying out the invention.

The novel process of the invention is a dry system capable of operating at various temperatures determined by the adsorption/desorption characteristics of the SOx transfer additive.

The flue gas directed to the SOx removal process of the invention is e.g. at any temperature from 120°C (250°F) to in excessl of 925°C (1700°F). Depending on the adsorbent used, the flue gas temperature will be adjusted by cooling or heating to match desired process operating temperature. Unless substantially all carbon is present as carbon dioxide, the gas should be pretreated to combust carbon monoxide by mixing with air to give excess oxygen.

The conditions in the desorber depend on the adsorbent used. There is a desorption time and temperature relationship which varies with the composition of the adsorbent. For a particular adsorbent residence time in the desorber, there is a minimum desorption temperature required to remove the sulfur deposited on the adsorbent. Preferably, desorption temperature exceeds 565°C (1050°F). The temperature of the desorbing gas can be regulated by heat exchange with the desorber off gas or clean flue gas and a trim heater. A number of light hydrocarbon gas mixtures mixed with water have been successfully used as desorb gas. Hydrogen or mixtures of hydrogen and light hydrocarbon gas are suitable desorption gases when mixed with water vapor. The desorbed off gas contains $H_2S$ which can be removed by conventional gas treating techniques such as amine treating. Desorption times exceed one second and typically are designed for three minutes or greater for stability of operation.

With this new SOx removal process, there is no large water consumption or sludge dewatering required. The adsorbents used in this new system are fluidizable materials, such as microspheres, and are readily fluidized and circulated between the adsorber and desorber. All the equipment operated at high temperatures can be refractory-lined so that no expensive metallurgy is used.

Flue gases from systems containing particulates, such as FCC units or selective vaporization units, are preferably treated upstream of the adsorption system with solids separation devices to minimize solids from these systems accumulating in the system of the present invention and diluting the adsorbent. However, the system of the present design can reduce dilution of adsorbent by selectively rejecting residual foreign matter or non-adsorbent particles.

In the cases of gases containing boiler fly ash or foreign material, the desorber vessel and cyclone system can be designed in a manner well-known to those skilled in the art to separate the SOx transfer material from these other particles Separations can be based on the use of adsorbent material of different particle size and/or average bulk density. The adsorber system can utilize high efficiency solid separators to ensure relatively solids-free clean adsorber flue gas; the solids removed from the flue gas are transferred to the desorber vessel, whereby a combination of elutriation and cyclone selection can be used to separate the foreign matter from the adsorbent.

With reference to the accompanying figure illustrating a preferred embodiment of the SOx treatment of the present invention, SOx-laden waste gas (A), available at a temperature between 650°C (1200°F) and 760°C (1400°F), is mixed with a regulated flow of clean adsorbent. The adsorbent and waste gas mixture and any foreign particulate matter are contacted in adsorber (B) at superficial gas velocities sufficient to provide for fast fluid transport of the adsorbent. The essentially solids free clean flue gas (D) and sulfur-laden adsorbent are separated in a high efficiency solids separation device (C). The sulfur oxide analyzer (E) is used to control the adsorbent slide valve (F) that regulates the flow of clean adsorbent to the adsorber. Sulfur containing adsorbent is then directed to the desorption vessel (G) which in this case also serves as a surge vessel to ensure enough absorbent volume so that the system is stable under various process variable changes. This system could also be a riser but for stability of operation there must be a surge volume. Since the desorber gas volume is relatively low compared to the volume of flue gas this system is designed with a bed which allows for surge and elutriation of finer foreign particles. A mixture of one or more reducing gases (H), which for an ART or FCC system could be wet or dry gas, and steam or water (I) are added to the desorption vessel. Clean adsorbent from the desorption vessel is supplied to the adsorbent slide valve (F). Desorption off gas, comprising the reducing gas mixture, steam and $H_2S$, and most if not all of any foreign particulate matter entering with the waste gas and some entrained adsorbent are separated in a second solids separation device (J). The desorption off gas (K) can then be treated to remove $H_2S$.

The pressure in the desorption vessel is controlled by differential pressure control (DPC) between the adsorption vessel and the desorption vessel.

The foreign particulate matter entering with the waste gas stream will normally be of finer particle size than the adsorbent. Therefore, at the proper design superficial velocity for the desorber, essentially all the foreign matter will be elutriated from the desorber dense bed along with some adsorbent. Solids separator (J) can be designed as a two stage system to recover the majority of the coarser elutriated adsorbent and return it to the dense bed in desorber (G) through line (M) while the finer foreign particles will be recovered in the second stage high efficiency solid separators and sent to disposal through (L).

An alternative to this system would be to use a lower efficiency adsorber solids separator (C) which would allow the finer foreign particles to exit the adsorber with the clean flue gas (D) to be collected in a downstream fines removal facility such as an electrostatic precipitator, scrubber or other fine particulate separation device. In this case, desorber solids separator (J) would most likely be a single stage system.

When NOx removal is desired, clean hot flue gas from (D) can be charged to a selective catalytic reduction system, e.g.

for reduction of NOx with ammonia gas - suitably as described in U.S. 4,157,375 to which reference is directed for detail.

Typically, the operating parameters for adsorber (B) will be between 595 and 815°C (1100 and 1500°F). The velocity, greater than 1.1 m/sec (3.5 ft/sec) or greater than transport velocity in order to assure a dilute phase operation and less than 30.5 m/sec (100 ft/sec) and usually will be maintained in the range of 12-24.5 m/sec (40 to 80 ft/sec). The pressure on the adsorber will typically be between 34.5 and 415 kPa (5 and 60 psia), preferably between 9.5 and 310 kPa (1.4 and 45 psia) and gas time will typically be 1 second or less.

The efficiency of separator (J) is not narrowly critical and all that is required is that there be a very rapid disengagement of circulating solids and vapors Separators of this type are disclosed in U. S. 4,285,706; U. S. 4,348,215; and U. S. 4,398,932, to which reference is directed for detail. The high efficiency separator (C) is a conventional type cyclone. It is to be understood that it can be one or a plurality of cyclones capable of removing more than 99.0%, preferably more than 99.99% of the particulates in a gas stream. Preferred separator (C) is of the multicyclone type, described in U. S. 4,285,706, to which reference is again directed for detail.

A large number of regenerable oxides and combinations of oxides for reaction with SOx are described in the prior art and many can be used in accordance with the principles of this invention. In general, these compounds are stable solids at the temperature of the adsorption zone in that they do not melt, sublime or decompose at such temperatures. The usable oxides are thermodynamically capable of associating with SOx upon renewed contact between absorbent and flue gas at the temperature of such contact in an oxidizing atmosphere. The resultant sulfur compounds are capable of reduction by hydrogen and/or hydrocarbons mixed with water vapor at temperatures in the desorption zone, say 565-870°C (1050-1600°F), to produce $H_2S$ and thus regenerate the adsorption properties of the oxides for SOx in an oxidizing atmosphere. Nonlimiting examples of adsorbents are: alumina, magnesia, combinations of magnesia and alumina such as spinels, any of the aforementioned associated with at least one rare earth metal compound, especially cerium or lanthanum, alkalized alumina and bauxite. Adsorbents are of various effectiveness at different temperatures. While the terms "adsorbent", "adsorb" and "desorb" are used herein, the mechanism by which SOx transfer agents work is not fully understood. Thus, the terms are intended to be nonlimiting with regard to the actual mechanisms by which they operate.

The adsorbent is preferably in the form of microspheres and must have a particle size distribution suitable for fluidization. Typically, particles have a size of about 20 to about 150 microns; average particle size is typically of 60 to 80 microns. The particles are sufficiently attrition-resistant to resist breakdown into smaller particles when they are cycled in the process. Generally, surface area of the fresh (unused adsorbent) is 30 $m^2/g$, more usually above 100 $m^2/g$.

The following examples are given to illustrate features of the invention and are not to be construed as being limiting.

A series of tests was carried out to determine whether SOx could be effectively removed on a continuous basis from a simulated flue gas by ultrashort contact time in a fast, fluid transport riser with a potentially regenerable metal/oxide SOx acceptor (sorbent) in the form of fluidizable microspheres and the sulfur loaded sorbent be cycled for regeneration, also on a continuous basis, with light hydrocarbon gases to release SOx associated with the sorbent as $H_2S$, forming a metal oxide which is recycled to the sorption zone. The metal oxide sorbent used in these tests was composed of a mixture of rare earth oxides supported on alumina, the sorbent being in the form of attrition-resistant, fluidizable microspheres.

It was found that by using contact times of only about one second in a fast fluid transport riser, 97% of the SOx contained in simulated flue gas streams containing between 1400 and 4000 ppmv $SO_2$ could be continuously removed by this adsorbent at a temperature of 705°C (1300°F) and desorbed by a reducing gas with added water vapor at temperatures above 565°C (1050°F). It was observed that addition of water vapor to the reducing gas increased regeneration of the sorbent and that SOx sorption at the short contact time was retarded by the presence of water vapor. It should be noted that a 565°C (1050°F) desorption temperature exceeds that of the riser of FCC units in which prior art attempts to regeneate SOx transfer agents were operated. Details of the test procedure and materials were as follows.

The absorbent used in the test was microspheres of alumina impregnated with a solution of lanthanum-rich mixed rare earth salts and calcined to convert the rare earth metal salts to oxides. The adsorbent in fresh and equilibrium state had a surface are of 196 $m^2$/g and 77 $m^2$/g, respectively, and a pore volume in fresh and equibrium state of 0.247 and 0.245 cc/g, respectively. Chemical composition was as follows:

| Fresh | | Equilibrium |
|---|---|---|
| 22.1 | REO (total) | 21.4 |
| 12.7 | $La_2O_3$ | 12.0 |
| 6.51 | $CeO_2$ | 6.35 |
| 2.72 | $Nd_2O_3$ | 2.93 |
| 0.05 | $Sm_2O_3$ | 0.02 |
| 0.11 | $Pr_6O_{11}$ | 0.14 |

The adsorbent was evaluated in TGA (DuPont Model 1090) equipment using a 72.44 mg sample of fresh adsorbent, sulfated to 4.5% S, heated in hydrogen flowing at 40 cc/min. with temperature being increased at the rate of 11°C/min (20°F/min). A graph of weight loss was automatically recorded as a function of temperature. It was found that weight loss was initiated at 505.8°C (942°F), peaking at 610.2°C (1130°F) (where there was an 11.58% weight loss). No additional weight loss was observed at temperatures in excess of 629.4°C (1165°F).

Flue gases were simulated by mixing water, air and nitrogen with gas from cylinders containing $SO_2$ and $CO_2$. Mixed hydrocarbon gases from cylinders were combined with water and used as desorption gas. The simulated flue gas composition when mixed with fluidizing nitrogen approximated the composition of the flue gas from a commercial selective vaporization process. Water was added to the flue gas to approximate the flue gas resulting from the combustion of coke containing 5 wt% $H_2$. The desorption gases were blended to approximate the wet gas stream of the same commercial selective vaporization unit after removal of $H_2S$, $C5^+$ and $C_4^=$. Various amounts of water were added to the desorption gas to facilitate conversion of metal sulfides to $H_2S$ and metal oxides. The compositions of these gases were as follows:

7

| Flue Gas | | Cylinder 1 | Cylinder 2 | Cylinder 3 |
|---|---|---|---|---|
| | $N_2$ | - | - | - |
| | $O_2$ | - | - | - |
| | $CO_2$ | 97.6 | 98.5 | 99.0 |
| | $CO$ | - | - | - |
| | $SO_2$ | 2.4 | 1.5 | 2.0 |

| Desorption Gas | | Cylinder 1 | Cylinder 2 | Cylinder 3 |
|---|---|---|---|---|
| | $H_2$ | 24.87 | 24.63 | 23.66 |
| | $C_1$ | 30.67 | 32.48 | 32.86 |
| | $C_2$ | 11.67 | 11.64 | 12.81 |
| | $C_2=$ | 16.62 | 16.94 | 16.00 |
| | $C_3$ | 2.60 | 2.46 | 2.51 |
| | $C_3=$ | 9.25 | 8.87 | 8.99 |
| | $iC_4$ | 0.21 | 0.16 | 0.17 |
| | $nC_4$ | 0.48 | 0.31 | 0.38 |
| | $C_4=$ | 3.35 | 2.39 | 2.43 |
| | $N_2$ | 0.28 | 0.05 | 0.12 |

A conventional circulating FCC pilot plant was modified to test the continuous SOx adsorption and sulfur desorption using the ultrashort contact time for adsorption. The modifications were made in such a way that adsorption and desorption occurred simultaneously in different sections of the pilot plant. In using the circulating unit, a folded riser was used for short contact adsorption and the regeneration section was used for desorption.

A Tutwiler titration was used to measure SOx concentrations during this test program. The Tutwiler technique is a starch iodide titration commonly used in sulfur plants to detect total sulfur in gas effluent streams. The accuracy of this technique was verified with the EPA-approved SOx detection method.

The FCC pilot plant unit that was employed had been designed to operate with continuous flow of fluidizable cracking catalyst between regenerator and reactor vessels. The unit was modified in order to operate at adsorption times of 1 second and desorption times of 15 to 40 minutes in order to study the adsorption of sulfur oxides on the adsorbent. The adsorbent circulation rates were measured by timing the increase in adsorbent level in the reactor vessel after blocking the adsorbent flow from the reactor to the regenerator vessel.

Modifications included the installation of mixing manifolds that allowed the use of different concentrations of SOx in the flue gas or different compositions of desorption gases.

During two of the tests, adsorption off gas was collected in a Mylar bag. This gas was then analyzed by the EPA-approved SOx technique. Measurements of the SOx concentration in scrubbed flue gas as measured by the Tutwiler technique and the EPA-approved method were within 7 ppmv. Fresh starch solution for the Tutwiler tests was made daily and blank solutions were run several times during the course of daily testing. The presence of $H_2S$ in the desorption off gas was verified by Draeger tube measurements.

Typical volumetric ratio of flue gas to desorption gas to desorption water was $1 \times 10^6 : 5 \times 10^4 : 18$.

The first series of tests were run at an adsorption temperature of 1300°F and a desorption temperature of 705°C (1300°F). Water corresponding to 5 Wt.% hydrogen in coke was added to both the flue and desorption gases. Flue gas to adsorbent ratios between 0.1 and 0.15 standard $m^3$/kg (1.6 and 2.4 $ft^3$ per

8

pound) of adsorbent were used. Concentrations of SOx in the flue gas were between 1700 and 4300 ppmv while the SOx removal averaged 97.5%.

The second series of tests were run at adsorption temperatures of 705°C (1300°F) and desorption temperatures of 480°C (900°F). This series of tests was marked by an average SOx removal of 80%. The flue gas to adsorbent ratios were between 0.09 and 0.18 $m^3$ (standard)/kg (1.4 and 2.9 $ft^3$/pound) of adsorbent while the SOx concentration in the flue gas averaged 1900 ppmv. During this series of tests,the water flow to the adsorber and desorber were varied. Although conclusions were based on tests using a low desorption temperature of 480°C (900°F), a decrease in water flow to either the flue gas or desorption gas was found to decrease the measured SOx removal. The sulfur level on the adsorbent increased monotonically during the course of this series of tests to 1.1 wt.%. At this sulfur level, the desorption temperature was increased in 28°C (50°F) increments until a large increase in $H_2S$ concentration in the desorption of gas was noticed. Flue gas containing SOx was fed to the adsorber during this sulfur strip. A large spike in $H_2S$ was noted at a desorption temperature of 595°C (1100°F). This occurred at the same temperature on TGA traces of sulfur laden adsorbent. The sulfur content of the adsorbent was reduced to .09 wt.% during desorption and the SOx removal capacity of the adsorbent was restored.

The adsorbent in the unit was changed between the second and third series of tests and replaced with fresh adsorbent. The desorption temperature was increased to 705°C (1300°F) and the adsorption temperature was maintained at 705°C (1300°F) for the third series of tests. The SOx removal averaged 93%. There was a general trend of increasing SOx removal with increased water flow to the desorption section. By doubling the water rate to the desorber, the SOx removal increased from 87% to 98%.

An elementary error analysis was conducted on the results of this program. The error in SOx removal was ± 2.5% at 98% removal. Some of these errors were due to the sulfur determination of the adsorbent. It was subsequently found that the repeatability of the sulfur on adsorbent results was greatly enhanced by grinding the samples and reporting the results to 3 decimal places instead of the standard 2 places.

During two consecutive tests, sufficient adsorber off gas was collected to run EPA-approved SOx determinations. The test results calculated using the Tutwiler and EPA methods were in close agreement. For the first test, the Tutwiler method yielded 100% SOx removal while the EPA method indicated 99.2% removal. During the second test, the Tutwiler sulfur removal was 99.6% while the EPA method yielded 99.8% removal.

## Claims

**1.** A process for removing oxide(s) of sulfur from a hot waste gas which contains one or more oxides of sulfur and substantially all of the carbon present as carbon dioxide, said process comprising :

(a) continuously passing said hot waste gas into contact with hot fluidizable particles of regenerable sulfur oxide adsorbent which adsorb oxide(s) of sulfur from said gas;

(b) separating the gas from adsorbent particles now carrying oxide(s) of sulfur so that the adsorbent particles and gas containing oxide(s) of sulfur are never in contact with each other under conditions such that a bed of adsorbent particles is present;

(c) continuously passing the separated fluidizable particles of adsorbent into contact at elevated temperature with a stream of reducing gas containing an effective amount of water vapor for a time and temperature sufficient to release adsorbed sulfur oxide(s) and form a desorption off-gas containing hydrogen sulfide;

(d) continuously separating said desorption off-gas from the hot fluidizable particles of adsorbent now depleted of sulfur; and

(e) continuously recirculating hot fluidizable particles of adsorbent from step (d) to step (a) for contact with further such waste gas;

characterised in that the contact in step (a) is concurrent contact in a riser in a dilute phase entrained solids zone at a superficial gas flow rate sufficient to effect fluid transport of said particles through said riser, in that the separated particles from step (b) are passed immediately to a regenerator for step (c), and in that said regenerator is in direct flow communication with said riser.

**2.** A process according to claim 1 wherein step (c) is carried out at a temperature in excess of 565°C (1050°F).

**3.** A process according to claim 1 or 2 wherein contact between adsorbent and desorbing gas in step (a) is at a superficial gas velocity below 30.5 m/sec (100 ft/sec), e.g. 12-24.5 m/sec (40 to 80 ft/sec) and for a period of less than 30 seconds.

**4.** A process according to any preceding claim wherein temperature in step (a) is 120˚C (250˚F) or higher, e.g.620˚C (1150˚F) or higher, preferably up to 760˚C (1400˚F).

**5.** A process according to any preceding claim wherein said adsorbent comprises at least one rare earth compound supported on particles comprising alumina.

**6.** A process according to any preceding claim wherein said reducing gas comprises at least one gas selected from hydrogen and light hydrocarbons.

**7.** A process according to any preceding claim wherein said waste gas arises from the combustion of carbonaceous fuel or from a smelting operation or comprises tail gas from a sulfur plant.

**8.** A process according to any preceding claim wherein adsorbent particles elutriated in step (c) are separated from the desorption off-gas and can be recirculated.

**9.** A process according to any preceding claim wherein said waste gas contains particulates which together with the adsorbent particles are separated from the gas at the outlet of the riser, these particles preferably being elutriated in desorption step (c) and separated from the desorption off-gas, preferably after separation from the desorption off-gas of any co-elutriated adsorbent.

**10.** A process according to any preceding claim wherein said waste gas contains particulates which remain in the gas leaving the riser after separation of the adsorbent particles and which are then separated from this gas, e.g. by an electrostatic precipitator, scrubber or other fine particle retention device.

**11.** A process according to any preceding claim wherein the contact between adsorbent and desorbing gas in step (c) is for a gas time greater than 1 second.

**12.** A process according to any preceding claim wherein the gas separated in step (b) is treated for removal of NOx e.g. by selective catalytic reduction.

**Revendications**

**1.** Procédé pour éliminer un (ou des) oxyde(s) de soufre à partir d'un gaz résiduaire chaud qui contient un ou plusieurs oxydes de soufre et sensiblement la totalité du carbone présent sous la forme de dioxyde de carbone, ledit procédé comprenant les opérations consistant à :

(a) faire passer en continu ledit gaz résiduaire chaud en contact avec des particules fluidisables chaudes d'adsorbant d'oxyde de soufre régénérable, lesquelles adsorbent le (ou les) oxyde(s) de soufre dudit gaz ;

(b) séparer le gaz des particules d'adsorbant supportant alors le (ou les) oxyde(s) de soufre, de sorte que les particules d'adsorbant et le gaz contenant le (ou les) oxyde(s) de soufre ne soient jamais en contact réciproque dans des conditions telles qu'un lit de particules d'adsorbant soit présent ;

(c) faire passer en continu les particules fluidisables séparées d'adsorbant en contact à température élevée avec un courant de gaz réducteur contenant une quantité efficace de vapeur d'eau pendant un laps de temps suffisant et à une température suffisante pour libérer le (ou les) oxydes(s) de soufre adsorbé(s) et former un gaz d'échappement de désorption contenant du sulfure d'hydrogène ;

(d) séparer en continu ledit gaz d'échappement de désorption à partir des particules fluidisables chaudes d'adsorbant alors appauvries en soufre ; et

(e) recycler en continu à l'étape (a) les particules fluidisables chaudes d'adsorbant provenant de l'étape (d) en vue d'un nouveau contact avec un tel gaz résiduaire ;

caractérisé par le fait que le contact à l'étape (a) est un contact à co-courant dans une colonne montante dans une zone de matières solides entraînées en phase diluée, à un débit de gaz superficiel suffisant pour effectuer le transport à l'état fluide desdites particules à travers ladite colonne montante, par le fait que l'on fait passer les particules séparées provenant de l'étape (b) immédiatement dans un régénérateur en vue de l'étape (c), et que ledit régénérateur est en communication d'écoulement direct avec ladite colonne montante.

**2.** Procédé selon la revendication 1, dans lequel l'étape (c) est effectuée à une température dépassant 565 °C (1050 °F).

3. Procédé selon l'une des revendications 1 ou 2, dans lequel le contact entre l'adsorbant et le gaz résiduaire à l'étape (a) est conduit à une vitesse superficielle de gaz inférieure à 30,5 m/sec (100 pieds/sec.), par exemple, de 12-24,5 m/sec. (40 à 80 pieds/sec.) et pendant une période de temps de moins de 30 secondes.

4. Procédé selon l'une quelconque des revendications précédentes, dans lequel la température à l'étape (a) est de 120 °C (250 °F) ou au-dessus, par exemple, de 620 °C (1150 °F) ou au-dessus, allant, de préférence, jusqu'à 760 °C (1400 °F).

5. Procédé selon l'une quelconque des revendications précédentes, dans lequel ledit adsorbant comprend au moins un composé des terres rares supporté sur des particules comprenant de l'alumine.

6. Procédé selon l'une quelconque des revendications précédentes, dans lequel ledit gaz réducteur comprend au moins un gaz choisi parmi l'hydrogène et les hydrocarbures légers.

7. Procédé selon l'une quelconque des revendications précédentes, dans lequel ledit gaz résiduaire provient de la combustion de combustible carboné ou d'une opération de coulée ou comprend un gaz de queue provenant d'une installation de récupération du soufre.

8. Procédé selon l'une quelconque des revendications précédentes, dans lequel les particules d'adsorbant décantées à l'étape (c) sont séparées du gaz d'échappement de désorption et peuvent être recyclées.

9. Procédé selon l'une quelconque des revendications précédentes, dans lequel ledit gaz résiduaire contient des particules lesquelles, conjointement avec les particules d'adsorbant, sont séparées du gaz à la sortie de la colonne montante, ces particules étant, de préférence, décantées à l'étape de désorption (c) et séparées du gaz d'échappement de désorption, de préférence, après la séparation du gaz d'échappement de désorption de tout adsorbant co-décanté.

10. Procédé selon l'une quelconque des revendications précédentes, dans lequel ledit gaz résiduaire contient des particules qui restent dans le gaz quittant la colonne montante après séparation des particules d'adsorbant et qui sont ensuite séparées de ce gaz, par exemple, par un dispositif de précipitation électrostatique, une tour de lavage ou autre dispositif de rétention de fines particules.

11. Procédé selon l'une quelconque des revendications précédentes, dans lequel le contact entre l'adsorbant et le gaz désorbant à l'étape (c) est conduit pendant un temps de séjour du gaz supérieur à l seconde.

12. Procédé selon l'une quelconque des revendications précédentes, dans lequel le gaz séparé à l'étape (b) est traité pour l'élimination des $NO_x$, par exemple, par réduction catalytique sélective.

**Patentansprüche**

1. Verfahren zur Entfernung von Schwefeloxid(en) aus heißem Abgas, das ein oder mehrere Schwefeloxide und im wesentlichen allen vorhandenen Kohlenstoff als Kohlendioxid enthält, durch
   (a) kontinuierliches Inkontaktbringen des heißen Abgases mit heißen fluidisierbaren Teilchen eines regenerierbaren Schwefeloxidadsorptionsmittels, das Schwefeloxid(e) aus dem Gas adsorbiert;
   (b) Trennen des Gases von den jetzt mit Schwefeloxid(en) beladenen Adsorptionsteilchen, so daß die Adsorptionsteilchen und das Schwefeloxid(e) enthaltende Gas niemals unter Bedingungen miteinander in Kontakt sind, daß sich ein Adsorptionsteilchenbett ergibt;
   (c) kontinuierliches Inkontaktbringen der abgetrennten fluidisierbaren Teilchen bei erhöhter Temperatur mit einem Strom aus reduzierendem Gas, der eine wirksame Menge Wasserdampf enthält, über eine Zeit und eine Temperatur, die ausreichen, adsorbierte(s) Schwefeloxid(e) freizusetzen und ein Schwefelwasserstoff enthaltendes Desorptions-Abgas zu bilden;
   (d) kontinuierliches Abtrennen des Desorptions-Abgases von den jetzt schwefelabgereicherten heißen fluidisierbaren Adsorptionsmittelteilchen; und
   (e) kontinuierliches Zurückführen heißer fluidisierbarer Adsorptionsmittelteilchen aus Schritt (d) in Schritt (a) für den Kontakt mit weiterem Abgas;
dadurch gekennzeichnet, daß der Kontakt in Schritt (a) ein gleichlaufender Kontakt in einem Steiger in einer Zone mit mitgerissenen Feststoffen in verdünnter Phase bei einer Oberflächengasfließgeschwindigkeit ist, die ausreicht, den fluiden Transport der Teilchen durch den Steiger zu bewirken, daß die abgetrennten Teilchen aus Schritt (b) unmittelbar einem Regenerator für Schritt (c) zugeführt werden und daß der Regenerator in direkter Fließverbindung mit dem Steiger steht.

2. Verfahren nach Anspruch 1, worin Schritt (c) bei einer Temperatur von mehr als 565°C (1050°F) durchgeführt wird.

3. Verfahren nach Anspruch 1 oder 2, worin der Kontakt zwischen Adsorptionsmittel und desorbierendem Gas in Schritt (a) bei einer Oberflächengasgeschwindigkeit von weniger als 30,5 m/sec (100 ft/sec), beispielsweise 12 bis 24,5 m/sec (40 bis 80 ft/sec) über einen Zeitraum von weniger als 30 Sekunden stattfindet.

4. Verfahren nach einem der vorstehenden Ansprüche, worin die Temperatur in Schritt (a) 120°C (250°F) oder höher ist, beispielsweise 620°C (1150°F) oder höher, vorzugsweise bis zu 760°C (1400°F).

5. Verfahren nach einem der vorstehenden Ansprüche, worin das Adsorptionsmittel wenigstens eine Seltenerdverbindung auf Aluminiumoxid enthaltenden Trägerteilchen umfaßt.

6. Verfahren nach einem der vorstehenden Ansprüche, worin das reduzierende Gas wenigstens ein aus Wasserstoff und leichten Kohlenwasserstoffen ausgewähltes Gas umfaßt.

7. Verfahren nach einem der vorstehenden Ansprüche, worin das Abgas aus der Verbrennung von kohlenstoffhaltigem Brennstoff oder aus einem Schmelzvorgang stammt oder Abgas aus einer Schwefelfabrik umfaßt.

8. Verfahren nach einem der vorstehenden Ansprüche, worin die in Schritt (c) ausgetragenen Adsorptionsmittelteilchen vom Desorptions-Abgas abgetrennt werden und rückgeführt werden können.

9. Verfahren nach einem der vorstehenden Ansprüche, worin das Abgas Feinstäube enthält, die zusammen mit den Adsorptionsmittelteilchen am Auslaß des Steigers vom Gas abgetrennt werden, wobei diese Teilchen vorzugsweise in Desorptionsschritt (c) ausgetragen und vom Desorptions-Abgas abgetrennt werden, vorzugsweise nach der Abtrennung von mit ausgetragenem Adsorptionsmittel vom Desorptions-Abgas.

10. Verfahren nach einem der vorstehenden Ansprüche, worin das Abgas Feinstäube enthält, die im den Steiger verlassenden Gas nach der Abtrennung der Adsorptionsmittelteilchen verbleiben und die dann aus diesem Gas abgetrennt werden, beispielsweise mittels eines elektrostatischen Abscheiders, Wäschers oder anderer Rückhaltevorrichtungen für Feinstäube.

11. Verfahren nach einem der vorstehenden Ansprüche, worin der Kontakt zwischen Adsorptionsmittel und Desorptionsgas in Schritt (c) für eine Gaszeit von mehr als 1 sec stattfindet.

12. Verfahren nach einem der vorstehenden Ansprüche, worin das in Schritt (b) abgetrennte Gas zur Entfernung von NOx behandelt wird, beispielsweise durch selektive katalytische Reduktion.